**Europäisches Patentamt**

(19) **European Patent Office**

**Office européen des brevets**

(11) Numéro de publication: **0 078 203**

**B1**

(12) **FASCICULE DE BREVET EUROPÉEN**

(45) Date de publication du fascicule du brevet:
25.02.87

(51) Int. Cl.⁴: **B 60 R 22/36**

(21) Numéro de dépôt: **82401929.3**

(22) Date de dépôt: **20.10.82**

(54) Enrouleur perfectionné pour ceinture de sécurité.

(30) Priorité: **28.10.81 FR 8120230**

(43) Date de publication de la demande:
**04.05.83 Bulletin 83/18**

(45) Mention de la délivrance du brevet:
**25.02.87 Bulletin 87/9**

(84) Etats contractants désignés:
**DE GB IT SE**

(56) Documents cité:
**FR-A-2 401 671**
**FR-A-2 409 767**
**FR-A-2 452 941**
**FR-A-2 454 310**
**FR-A-2 476 491**
**US-A-3 291 416**

(73) Titulaire: **AUTOLIV DEVELOPMENT AKTIEBOLAG,**
**P.O. Box 124, S-447 00 Vargarda (SE)**

(72) Inventeur: **Gueguen, Daniel, 29 Avenue Molière,**
**F-78360 Montesson (FR)**
Inventeur: **Rothera, Jacques, 32 Avenue de**
**Brétigny, F-91240 St Michel S/Orge (FR)**

(74) Mandataire: **Hirsch, Marc- Roger, Cabinet Hirsch**
**34 rue de Bassano, F-75008 Paris (FR)**

EP 0 078 203 B1

LIBER, STOCKHOLM 1987

## Description

La présente invention concerne un enrouleur à blocage automatique pour ceinture de sécurité comportant: un mandrin monté à rotation dans un support et sur lequel est enroulée la sangle de la ceinture, ledit mandrin étant sollicité par un ressort de torsion dans le sens de l'enroulement et un dispositif de verrouillage constitué d'une came, d'une roue à rochet fixée au support et présentant une denture intérieure avec laquelle coopère une denture extérieure prévue sur la came et une roue d'inertie destinée à déplacer la came pour amener en prise sa denture avec la denture de la roue à rochet, et en cas de choc, bloquer le mandrin en rotation en empêchant le déroulement de la sangle, ledit mandrin étant constitué par de la matière plastique moulée renforcée par un barreau métallique sur lequel est montée une bobine de réception de la sangle et ledit mandrin tourillonnant directement dans ledit support et le barreau de renforcement du mandrin présentant à l'une de ses extrémités des portions qui font saillie hors de la matière dudit fourreau et qui présentent deux parties à nu coopérant avec des tronçons rectilignes diamétralement opposés du profil de came en vue de transmettre l'effort exercé par la sangle de la ceinture, de la denture de la came à la denture de la roue à rochet. De tels enrouleurs sont utilisés dans les ceintures de sécurité destinées notamment aux véhicules automobiles terrestres, marins, aériens ou spatiaux. Un rouleur de ce type est décrit dans FR.A.2 454 310.

On connaît des enrouleurs à blocage automatique pour ceintures de sécurité comportant un axe sur lequel la sangle de la ceinture est enroulée et qui est sollicité par un ressort de torsion dans le sens de l'enroulement, et un dispositif de verrouillage qui, en cas de choc, bloque l'axe de rotation en empêchant le déroulement de la sangle.

Le dispositif de verrouillage est souvent constitué par une came entourant une extrémité de l'axe du mandrin et entraînée par une roue d'inertie. La came présente une denture extérieure qui vient en prise avec la denture intérieure d'une roue à rochet fixée au support de l'enrouleur. Un tel dispositif est notamment décrit dans FR-A-2 454 310 où l'on retrouve une came, une roue à rochet fixée à un support avec sa denture intérieur qui coopère avec la denture extérieure de la came, ainsi qu'une roue d'inertie apte à déplacer la came pour amener sa denture en prise avec celle de la roue à rochet.

Les enrouleurs réalisés jusqu'à présent comportent un mandrin d'enroulement de la sangle constitué par un axe métallique massif dont l'extrémité coopérant avec la came présente un profil compliqué, ce qui accroit le coût de fabrication de l'enrouleur.

L'invention vise à remédier à l'inconvénient des enrouleurs de construction classique et à proposer un enrouleur qui soit de construction simple et compacte avec des sections de matière minimales tout en garantissant un fonctionnement efficace et fiable et en supprimant la plupart des bruits parasites dus aux vibrations en service sur un véhicule.

Selon l'invention, ce résultat est obtenu du fait que le barreau métallique est emmanché dans un fourreau en matière plastique et qui comporte des bourrelets d'extrémité anti-bruit venus de matière, en contact respectivement avec les extrémités des faces du barreau opposées aux parties à nu de celui-ci et destinées à coopérer avec des portions correspondantes du profil de came en position de repos, de manière à réduire le bruit occasionné par les vibrations. Dans un mode de réalisation de l'invention, au moins l'un des bourrelets comporte un prolongement (le cas échéant remplacé par une pastille) qui recouvre partiellement la région à nu voisine et qui joue le rôle d'élément anti-bruit lors du blocage de l'enrouleur en usage normal et d'élément de réaction dont l'écrasement sous l'action du barreau dans des conditions de choc, accentue la venue en prise des dentures de la came et de la roue à rochet. La roue à rochet et la came sont de préférence découpées dans une tôle avec des sens de découpe opposés, de sorte que le plat de découpage de la denture de la roue à rochet se trouve en regard de l'arrondi de la denture de la came.

Selon un autre mode de réalisation de l'invention, la roue d'inertie présente un grand nombre de trous ménagés dans une paroi annulaire et répartis à intervalles angulaires réguliers, pour la fixation de l'extrémité d'un ressort de rappel en fil, de très faible diamètre et de grande longueur, monté sur un moyeu fixe en rotation.

Selon un autre mode de réalisation, le support est en forme de chape dans les ailes de laquelle tourillonne ledit fourreau, et contre chacune des ailes de laquelle sont respectivement montés, dans des capots de protection, le dispositif de verrouillage associé à un détecteur d'accélération et le ressort de rappel du mandrin, les capots étant fixés aux ailes respectives du support par des pions fendus creux venus de matière avec les capots et engagés dans des trous correspondants prévus dans lesdites ailes et l'immobilisation des pions est assurée par introduction dans leur évidement d'une cheville cassable également venue de matière avec le capot correspondant. Lorsque les ailes du support sont maintenues par une entretoise, les extrémités de l'entretoise sont engagées dans des logements de maintien prévus dans chacun desdits capots. Entre le ressort de rappel du mandrin et l'aile correspondante du support, est alors interposé un flasque constitué par une pellicule de matière plastique dont la périphérie est prise entre l'aile du support et le capot contenant ledit ressort de rappel.

Selon une autre caractéristique de l'invention, le positionnement du mandrin dans le support est assuré par la coopération des surfaces d'extrémités dudit mandrin avec des saillies

annulaires entourant les orifices dans lesquels tourillonne le fourreau.

D'autres caractéristiques de l'invention apparaîtront au cours de la description qui va suivre, donnée uniquement à titre d'exemple et faite en référence aux dessins annexés, sur lesquels:

- la figure 1 est une vue en perspective éclatée de l'enrouleur pour ceinture de sécurité suivant l'invention;
- la figure 2 est une vue en coupe et en élévation du détecteur d'accélération de l'enrouleur selon la figure 1;
- la figure 3 est une vue en coupe partielle du détecteur de la figure 2 qui montre les moyens de rattrapage d'assiette du détecteur lorsque l'enrouleur est monté en position inclinée;
- la figure 4 est une vue partielle en coupe du dispositif de verrouillage de l'enrouleur suivant l'invention;,
- la figure 5 est une coupe suivant la ligne 5-5 de la figure 4, montrant le dispositif de verrouillage en position de repos;
- la figure 5a est une vue en coupe d'un détail de la figure 5 entouré par un cercle en trait mixte, montrant une variante de réalisation;
- la figure 6 est une vue analogue à celle de la figure 5 montrant le dispositif de verrouillage en position active;
- la figure 7 est une coupe du mandrin d'enroulement de la sangle montrant l'assemblage des divers éléments du mandrin entre-eux;
- la figure 8 est une vue partielle en coupe qui montre le maintien de l'entretoise du support de l'enrouleur par les capots d'extrémité de l'enrouleur;
- les figures 9 et 10 sont des vues partielles en coupe montrant les moyens d'immobilisation des capots d'extrémité de l'enrouleur sur le support métalliques, respectivement en position prête à l'assemblage et en position assemblée.

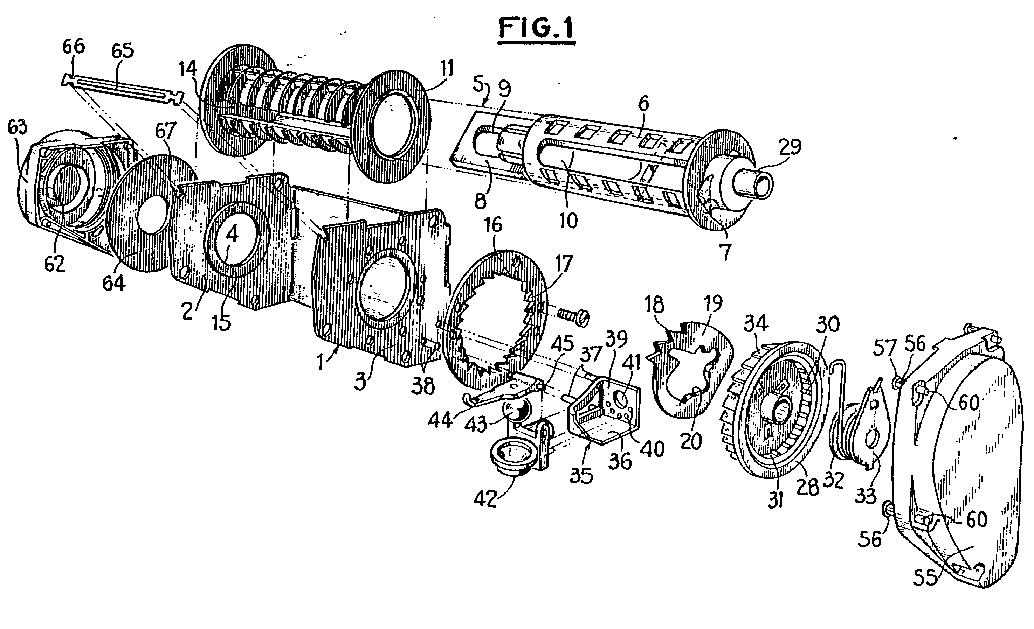

L'enrouleur représenté à la figure 1 comporte un support 1 métallique en forme de chape qui comporte dans ses deux ailes latérales 2 et 3 des orifices circulaires 4 coaxiaux destinés à recevoir à rotation les extrémités de l'axe d'un mandrin désigné par la référence générale 5 sur lequel s'enroule la sangle de l'enrouleur (non représentée).

Le mandrin 5 comporte principalement un axe 6 en forme de fourreau, réalisé en matière plastique moulée et présentant un logement axial 7 dans lequel est emmanché un barreau métallique plat de renforcement 8 qui est représenté sur la figure 1 dans une position partiellement engagée dans ledit fourreau. Le barreau 8 présente une lumière axiale 9 qui, en position montée du barreau, coincide avec une lumière correspondante 10 ménagée dans le fourreau 6 de façon à laisser passer l'extrémité de fixation de la sangle.

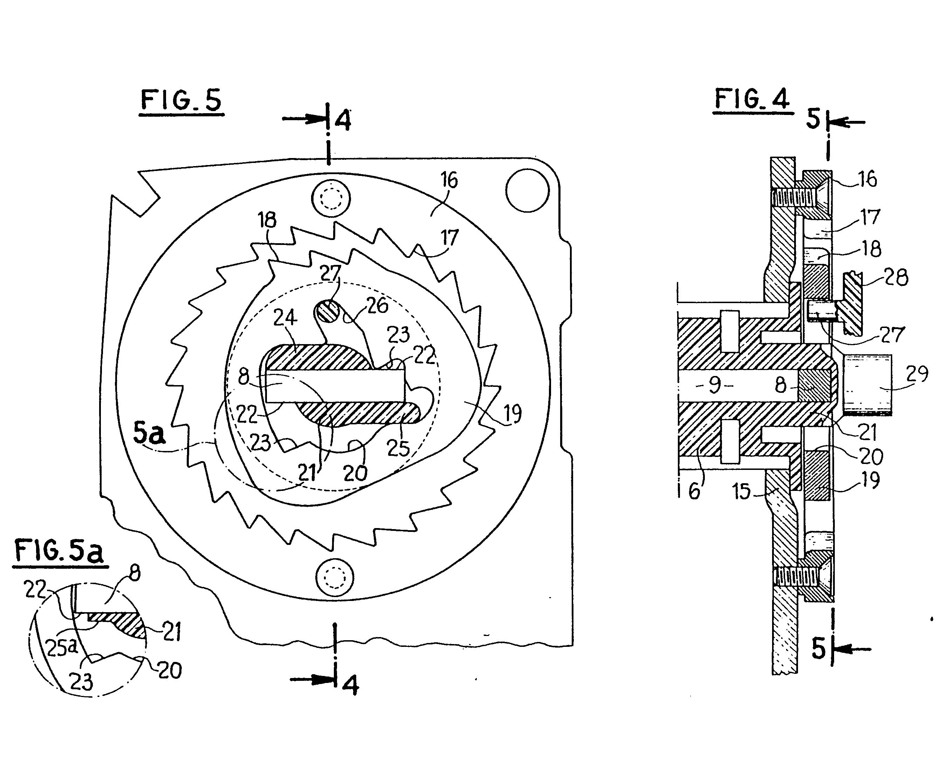

L'une des extrémités de l'axe 6 comporte des moyens qui font partie du dispositif de verrouillage de l'enrouleur et qui seront décrits plus en détail en référence à la figure 4.

Sur le fourreau 6 est montée une bobine 11, par exemple une bobine du type décrit au brevet français n° 2 452 941 appartenant à la Société AMCA, dont le corps annulaire est réalisé de façon à subir un écrasement radial sous l'effet de la traction élevée à laquelle la sangle de l'enrouleur est soumise en cas de chocs, ce qui ramène le diamètre minimal d'enroulement à une valeur voisine de celle de l'axe de l'enrouleur.

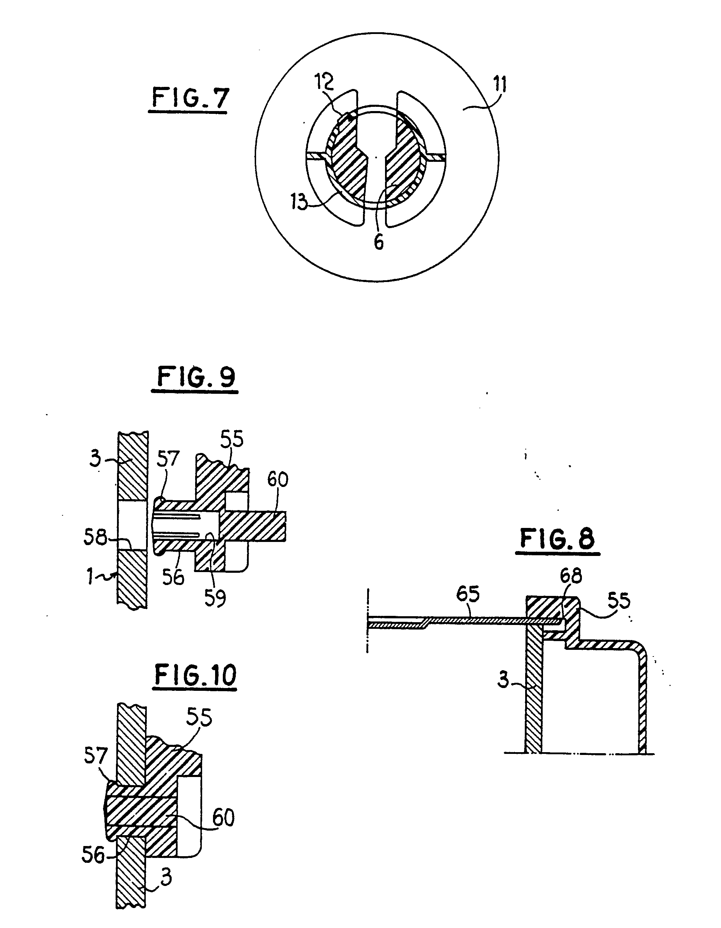

Comme le montre la figure 7, la bobine 11 est calée en rotation sur le fourreau 6 au moyen d'un ergot 12 porté par celui-ci, qui pénètre dans un orifice correspondant ménagé dans le corps annulaire 13 de ladite bobine.

Bien entendu, la bobine 11 présente elle aussi dans sa surface latérale, des passages axiaux 14 pour la sangle.

Le positionnement axial du mandrin 5 dans le support 1 est assuré par la coopération des surfaces d'extrémité dudit mandrin avec des saillies annulaires 15 entourant les orifices 4 ménagés dans les ailes 2 et 3 du support et obtenus par emboutissage de la matière de celui-ci.

A l'extérieur de l'aile 3 du support 1 est fixée une roue à rochet 16 coaxiale à l'orifice 4 pour le passage de l'axe 6 du mandrin. Cette roue à rochets présente une denture interne 17 destinée à coopérer avec la denture externe correspondante 18 d'une came 19 dont le profil de came 20 est constitué par un découpage sinueux et fermé qui sera mieux décrit en référence aux figures 4 à 6.

Comme le montre la figure 4, la came 19 est montée à l'intérieur de la roue à rochet 16 et de façon à entourer l'extrémité de l'axe 6 du mandrin 5 et du barreau 8.

La roue à rochet 16 et la came 19 sont réalisées par découpage dans une tôle. Le sens de la découpe de ces deux pièces est inversé de façon qu'au montage le plat de découpage de l'une des pièces se trouve en regard de l'arrondi de l'autre.

La Demanderesse a remarqué que cet agencement est particulièrement favorable pour les dentures 17 et 18 de la roue à rochet 16 et de la came 19. En effet, lorsque la denture 18 de la came vient en prise avec celle de la roue à rochets, les dents des deux pièces ont tendance à subir sous l'action de l'effort radial, un déplacement axial relatif. En raison de l'agencement précité, les surfaces de contact des deux dentures en présence, ont alors tendance à augmenter légèrement, ce qui réduit la pression exercée sur les deux dentures.

A son extrémité tournée vers la roue à rochets 16, l'axe 6 présente un tourillon 21 dont le diamètre est inférieur à la largeur du barreau 8. Le barreau 8 fait saillie hors de la surface latérale du tourillon et présente deux parties à nu 22 destinées à coopérer avec des tronçons rectilignes diamétralement opposés 23 du profil de came 20 en vue de transmettre l'effort exercé par la sangle de la ceinture, de la denture 18 à la denture 17 de la roue à rochets 16.

On voit sur la Fig.6, la coopération des portions 22 du barreau 8 avec les tronçons de profil rectilignes 23 correspondants. Le contact métal contre métal ainsi obtenu, permet à l'ensemble de transmettre les efforts importants qui se produisent lors d'un choc entraînant l'intervention de la ceinture de sécurité.

Les faces du barreau 8 opposées aux portions à nu 22, sont pourvues chacune de bourrelets 24 et 25 venus de matière avec le fourreau 6 et qui sont destinées à venir au contact de portions correspondantes du profil de came 20 lorsque le dispositif de verrouillage est en position de repos. Grâce à cet agencement représenté en détail à la Fig.5, on réduit considérablement le bruit occasionné par les vibrations.

A titre de variante, comme représenté à la Fig. 5a, le bourrelet 25 comporte un prolongement 25a qui recouvre partiellement la région à nu 22 voisine. Ce prolongement joue le rôle d'élément anti-bruit lors du blocage de l'enrouleur en usage normal et d'élément de réaction dont l'écrasement sous l'action du barreau 8 dans des conditions de choc, accentue la venue en prise des dentures de la came et de la roue à rochet. Un prolongement analogue peut également être prévu pour l'autre bourrelet 24. Il est également possible d'appliquer sur chaque région à nu, une pastille qui jouerait le même rôle que les prolongements précités.

Le profil de came 20 présente une excroissance 26 dans laquelle est engagé un ergot 27 d'entrainement de la came en rotation, ledit ergot étant porté par une roue dentée 28 en matière plastique montée à rotation sur les extrémités 29 du tourillon 21 prévu dans le prolongement du fourreau 6. La roue 28, généralement appelée roue d'inertie, est réalisée par injection et présente un grand nombre de trous 30 ménagés dans une paroi annulaire 31 et destinés à recevoir une extrémité en forme de crochet d'un ressort de sensibilité 32 monté sur un moyeu 33 destiné à être lui-même maintenu fixe en rotation. Le nombre de trous 30 prévu dans la roue 28 est par exemple de 17. Il permet de régler avec finesse la force de rappel exercée par le ressort 32 sur la roue 28. Le ressort 32 est avantageusement un ressort à fils et présente un diamètre très faible et une grande longueur, de sorte que sa courbe de réponse est très plate.

Les particularités du ressort 32 alliées aux nombreuses positions d'accrochage de son extrémité sur la roue d'inertie 28 assurent une très grande précision de réglage ainsi qu'une plage d'utilisation très large. Les variations de la force de rappel de ce ressort, d'une position de fixation de son extrémité en forme de crochet à la suivante,sont extrêmement faibles, ce qui présente un avantage important pour l'utilisateur.

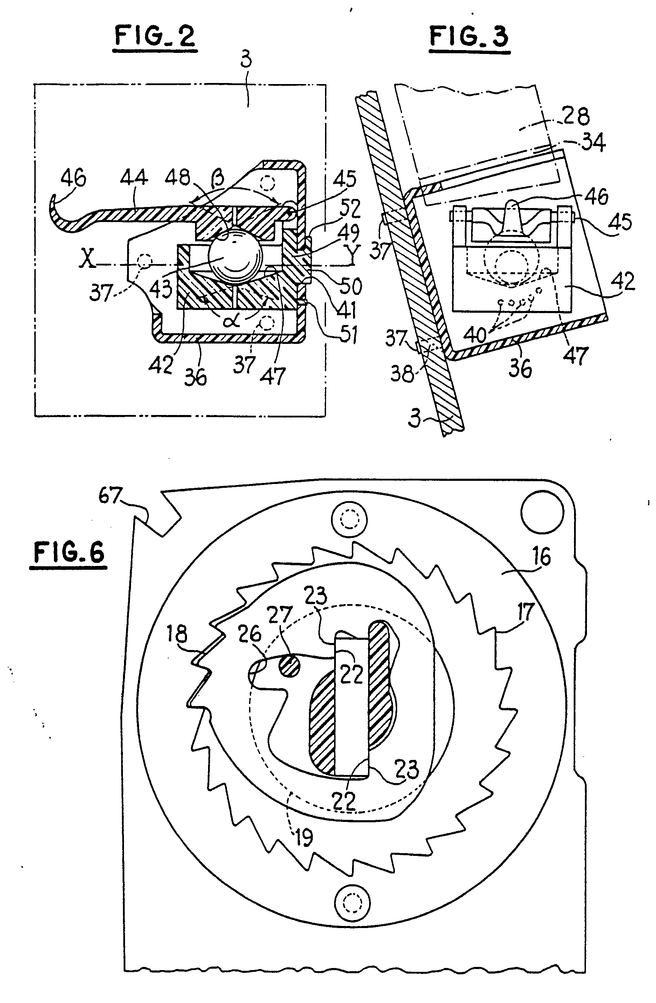

La roue d'inertie 28 présente une denture externe 34 qui coopère avec un détecteur d'accélération désigné par la référence générale 35 et qui va maintenant être décrit en se référant en particulier aux Fig.2 et 3.

Ce détecteur comporte principalement un premier boîtier 36 en matière plastique qui porte sur une de ses faces des pions 37 de fixation du boîtier contre l'aile 3 du support 1 par introduction desdits pions dans des trous correspondants 38 ménagés dans le support.

Dans une face latérale 39 perpendiculaire à sa face de fixation au support 1, le boîtier présente une série de trous 40 de positionnement espacés entre eux à des intervalles angulaires déterminés et placés sur une circonférence qui entoure un trou de plus grand diamètre 41. Dans le boîtier 36 est monté un second boîtier 42 formant berceau pour une masse d'inertie 43 constituée dans le présent exemple par une bille destinée à actionner un levier 44 articulé lui aussi sur le second boîtier 42 par un axe 45 et dont l'extrémité libre coopère avec la denture externe 34 de la roue d'inertie 28.

Ainsi qu'on le voit notamment à la Fig.2, le second boîtier 42 présente une cuvette 47 conique de réception de la bille 43, tandis que le levier 44 présente lui aussi un évidement conique 48 qui coiffe la bille 43. Le second boîtier 42 comporte en outre une portion 49 perpendiculaire au berceau qui porte une saillie 50 engagée dans l'orifice 41 du premier boîtier 36 ainsi qu'un ergot 51 destiné à être engagé dans l'un des trous 40 entourant le trou central 41 de manière à placer le second boîtier en position horizontale, compte tenu de l'inclinaison qui doit être donnée au support 1 de l'enrouleur.

A son extrémité, la saillie 50 présente des épanouissements 52 en forme de languettes de plus grande dimension que le diamètre de l'orifice 41 de manière à permettre l'immobilisation du second boîtier 42 par clipsage dans cet orifice.

Sur la Fig.3, on a représenté une certaine inclinaison du support de l'enrouleur, matérialisée par l'inclinaison de l'aile 3 de celui-ci à laquelle est fixé le premier boîtier 36 du détecteur d'accélération. Le second boîtier 42 est fixé dans le premier en choisissant pour son ergot 51 un trou 40 dont l'écartement angulaire par rapport à la verticale est propre à ramener la cuvette 47 du boîtier à l'horizontale.

Dans le mode de réalisation représenté aux figures à 3, le premier boîtier 36 est pourvu d'une série d'orifices 40 permettant le rattrapage de l'assiette du second boîtier 42 en fonction de plusieurs inclinaisons du boîtier. Toutefois, lorsqu'il s'agit de fabriquer en grande série des enrouleurs destinés à un type de véhicule particulier dont on connaît à l'avance l'inclinaison que devra présenter le boîtier de l'enrouleur lors de sa mise en place, il suffit, lors du moulage du premier boîtier 36 de ne prévoir dans la paroi 39 de celui-ci que le seul trou 40 correspondant au rattrapage d'assiette envisagé.

Une telle fabrication se fait très simplement en prévoyant dans le moule de réalisation du premier boîtier 36, un certain nombre d'inserts munis chacun d'une broche dont la position correspond à l'inclinaison voulue pour la formation du trou correspondant dans le boîtier 36.

Le moule est ainsi rendu utilisable pour la fabrication de boîtiers destinés à des enrouleurs présentant des inclinaisons différentes.

Le fonctionnement du détecteur d'accélération qui vient d'être décrit est le suivant. Lors d'une accélération, la bille 43 est déplacée dans la cuvette conique 47 du boîtier 42 et elle agit sur la cuvette conique du levier 44 ce qui l'oblige à sa déplacer vers le haut par oscillation autour de l'axe 45. Le bec 46 du levier se trouve ainsi en position de blocage de la roue d'inertie 28 par venue en prise avec sa denture 34.

La réaction à une accélération donnée est déterminée par l'angle , de la cuvette conique 47.

La distance de montée du levier est déterminée par les angles respectifs α et β des deux cuvettes 47 et 48.

Le boîtier à billes qui vient d'être décrit est utilisable pour toutes les inclinaisons comprises entre 0° et 30° aussi bien vers la gauche que vers la droite.

L'inclinaison est déterminée par le premier boîtier 36. On voit, grâce à l'agencement représenté à la Fig.2, que le second boîtier 42 peut occuper les diverses positions angulaires dans le premier boîtier 36 par rotation autour d'un axe horizontal XY constant quelle que soit l'inclinaison de l'enrouleur. Le jeu entre le bec 46 du levier 44 et la roue d'inertie 28 est donc constant.

Afin de déterminer l'angle d'inclinaison d'un détecteur d'accélération donné , celui-ci est identifiable de l'extérieur de l'enrouleur par une couleur différente du premier boîtier 36 et par conséquent des pions 37 de fixation du premier boîtier au support 1. Les boîtiers prévus pour être montés avec un angle d'inclinaison nul pourront être de couleur jaune, ceux destinés à être montés avec une inclinaison de 8° pourront être de couleur blanche, etc.

Le sens de l'inclinaison vers la gauche ou vers la droite peut être rendu reconnaissable en prévoyant pour l'un des trois pions de fixation 37 une forme différente de celle des deux autres. Par exemple, l'un des pions pourra être plat alors que les autres seront creux ou inversement.

Afin de rendre la réaction du détecteur d'accélération et sa sensibilité identiques dans les quatre directions, la cuvette 48 du levier 44 peut présenter une inclinaison par rapport à la cuvette 47 du second boîtier. Cette inclinaison est matérialisée par un décalage angulaire du sommet de la cuvette 48 du levier 44 par rapport à la verticale passant par le sommet de la cuvette 47 du second boîtier 42.

Le décalage angulaire est dirigé vers le bec 46 du levier 44.

L'ensemble comprenant la roue à rochets 16, la came 19, la roue d'inertie 28 et le détecteur d'accélération 35 est enfermé par un capot 55 en matière plastique qui est fixé à l'aile 3 du support 1 de la manière représentée aux figures g et 10. Le capot 55 présente sur sa face destinée à être appliquée contre le support 1, des pions fendus 56 pourvus de saillies d'extrémité radiales 57 et destinés à être engagés par clipsage dans des trous correspondants 58 ménagés dans l'aile 3 du support 1. Les pions 57 sont creux et le capot présente venue de matière en regard de l'évidement 59 de chaque pion, une cheville cassable 60 qui, comme le montre la figure 10 est enfoncée dans l'évidement 59 du pion correspondant après introduction de celui-ci dans son orifice 58. On obtient ainsi un verrouillage du capot qui rend son retrait pratiquement impossible sans un outillage spécial.

L'enrouleur représenté à la figure 1 présente en outre un ressort 62 de rappel du mandrin 5 logé dans un second capot 63 destiné à être appliqué contre l'aile 2 du support 1 opposée au mécanisme de verrouillage, un flasque mince 64 étant interposé entre le ressort et la face externe de l'aile 2 du support et pincé sur sa périphérie par le capot 63. Le flasque 64 est réalisé en une pellicule de matière plastique de faible épaisseur et empêche le contact métal contre métal entre le support 1 et le ressort 62. Le capot 63 est fixé à l'aile 2 du support 1 de la même manière que le capot 55.

L'écartement entre les ailes 2 et 3 du support 1 de l'enrouleur est assuré à l'aide d'une entretoise métallique fine 65 qui présente à chacune de ses extrémités des zones échancrées 66 engagées dans des encoches 67 prévues dans les ailes 2 et 3. L'immobilisation de l'entretoise 65 est assurée par les capots 55 et 63 qui présentent à cet effet, comme le montre la figure 8, des logements 68 pour les extrémités de l'entretoise se trouvant au-delà des échancrures 66 et dépassant hors des limites du support 1.

Le fonctionnement de l'enrouleur qui vient d'être décrit résulte de sa construction même et il est remarquable essentiellement par le fait que le dispositif de verrouillage, grâce au profil particulier de la came 19 qui coopère avec le barreau central 8 du mandrin 5, fonctionne de manière à la fois efficace en raison du contact métal contre métal du barreau avec les régions 23 de la came de manière à transmettre l'effort important engendré par un choc et matière plastique contre métal lorsque le dispositif est au repos, ce qui supprime pratiquement tout bruit dû aux vibrations.

L'enrouleur qui vient d'être décrit est de conception simple dans la mesure où son mandrin est réalisé en matière plastique moulée renforcée par un simple barreau métallique dont l'extrémité fait office d'élément de transmission coopérant avec la came dont l'entraînement est commandé par le détecteur d'accélération. La came, en raison de son profil qui englobe le logement pour le maneton de la roue d'inertie 28 présente l'avantage de ne pouvoir être montée que dans un seul sens,ce qui évite les erreurs. Par ailleurs, elle est simple à découper.

La finesse du ressort de rappel 32 de la roue d'inertie 28 permet un réglage extrêmement précis de la force de rappel de celle-ci, ainsi qu'un ajustement fin de l'inertie de cette roue lorsqu'elle est sollicitée par une accélération de la sangle. Enfin, le verrouillage des capots de protection du mécanisme de l'enrouleur, rend celui-ci pratiquement inviolable à moins de disposer d'un outillage spécialisé.

Par conséquent, l'enrouleur suivant l'invention allie une relative simplicité de construction à une bonne sécurité de fonctionnement et à une souplesse accrue d'adaptation aux exigences des constructeurs de véhicules automobiles.

## Revendications

1.- Enrouleur à blocage automatique pour ceinture de sécurité comportant: un mandrin (5) monté à rotation dans un support (1) et sur lequel est enroulée la sangle de la ceinture, ledit mandrin étant sollicité par un ressort de torsion (62) dans le sens de l'enroulement et un dispositif de verrouillage constitué d'une came (19), d'une roue à rochet (16) fixée au support (1) et présentant une denture intérieure (17) avec laquelle coopère une denture extérieure (18) prévue sur la came (19) et une roue d'inertie (28) destinée à déplacer la came (19) pour amener en prise sa denture (18) avec la denture (17) de la roue à rochet (16), et en cas de choc, bloquer le mandrin (5) en rotation en empêchant le déroulement de la sangle, ledit mandrin (5) étant constitué par de la matière plastique moulée renforcée par un barreau métallique (8) sur lequel est montée une bobine (11) de réception de la sangle et ledit mandrin (5) tourillonnant directement dans ledit support (1) et le barreau (8) de renforcement du mandrin (5) présentant à l'une de ses extrémités des portions qui font saillie hors de la matière dudit fourreau et qui présentent deux parties à nu (22) coopérant avec des tronçons rectilignes diamétralement opposés (23) du profil de came (20) en vue de transmettre l'effort exercé par la sangle de la ceinture, de la denture (18) de la came à la denture (17) de la roue à rochets (16), caractérisé en ce que le barreau métallique (8) est emmanché dans un fourreau (6) en matière plastique et qui comporte des bourrelets d'extrémité anti-bruit (24, 25) venus de matière, en contact respectivement avec les extrémités des faces du barreau (8) opposées aux parties à nu (22) de celui-ci et destinées à coopérer avec des portions correspondantes du profil de came (20) en position de repos, de manière à réduire le bruit occasionné par les vibrations.

2.- Enrouleur suivant la revendication 1, caractérisé en ce qu'au moins l'un des bourrelets (24, 25) comporte un prolongement (25a) (le cas échéant remplacé par une pastille) qui recouvre partiellement la région à nu (22) voisine et qui joue le rôle d'élément anti-bruit lors du blocage de l'enrouleur en usage normal et d'élément de réaction dont l'écrasement sous l'action du barreau (8) dans des conditions de choc, accentue la venue en prise des dentures (17, 18) de la came (19) et de la roue à rochet (16).

3.- Enrouleur suivant l'une quelconque des revendications 1 et 2, caractérisé en ce que la roue à rochet (16) et la came (19) sont découpées dans une tôle avec des sens de découpe opposés, de sorte que le plat de découpage de la denture (17) de la roue à rochet (16) se trouve en regard de l'arrondi de la denture (18) de la came (19).

4.- Enrouleur suivant l'une quelconque des revendications 1 à 3, caractérisé en ce que la roue d'inertie (28) présente un grand nombre de trous (30) ménagés dans une paroi annulaire (31) et répartis à intervalles angulaires réguliers, pour la fixation de l'extrémité d'un ressort de rappel (32) en fil, de très faible diamètre et de grande longueur, monté sur un moyeu (33) fixe en rotation.

5.- Enrouleur suivant l'une quelconque des revendications 1 à 4, caractérisé en ce que ledit support (1) est en forme de chape dans les ailes (2, 3) de laquelle tourillonne ledit fourreau (6), et contre chacune des ailes de laquelle sont respectivement montés, dans des capots de protection (55, 63), le dispositif de verrouillage (16, 19, 28) associé à un détecteur d'accélération (35) et le ressort de rappel (62) du mandrin, les capots (55, 63) étant fixés aux ailes respectives (2, 3) du support par des pions fendus creux (56) venus de matière avec les capots et engagés dans des trous (58) correspondants prévus dans lesdites ailes (2, 3) et en ce que l'immobilisation des pions (56) est assurée par introduction dans leur évidement (59) d'une cheville cassable (60) également venue de matière avec le capot correspondant.

6.- Enrouleur suivant la revendication 5, dans lequel les ailes (2, 3) du support (1) sont maintenues par une entretoise (65), caractérisé en ce que les extrémités de l'entretoise (65) sont engagées dans des logements de maintien (68) prévus dans chacun desdits capots (55, 63).

7.- Enrouleur suivant l'une quelconque des revendications 5 et 6, caractérisé en ce qu'entre le ressort de rappel (62) du mandrin (5) et l'aile correspondante (2) du support (1) est interposé un flasque (64) constitué par une pellicule de matière plastique dont la périphérie est prise entre l'aile (2) du support (1) et le capot (63) contenant ledit ressort de rappel (62).

8.- Enrouleur suivant l'une quelconque des revendications 5 à 7, caractérisé en ce que le positionnement du mandrin (5) dans le support (1) est assuré par la coopération des surfaces d'extrémités dudit mandrin avec des saillies annulaires (15) entourant les orifices (4) dans lesquels tourillonne ledit fourreau (6).

## Patentansprüche

1.- Selbstsperrender Sicherheitsgurt-Aufwickler, umfassend: einen drehbar in einem Träger (1) gelagerten Dorn (5), auf dem der Sicherheitsgurtriemen aufgewickelt wird und der von einer Torsionsfeder in der Aufwickelrichtung beaufschlagt ist, sowie eine Verriegelungsvorrichtung mit einer Nocke (19), einem am Träger (1) angeordneten Schaltrad (16), das eine Innenverzahnung (17) aufweist, die mit einer auf der Nocke (19) gebildeten Aussenverzahnung (18) zusammenwirkt und mit einem Verharrungsrad (28), das die Nocke (19) bewegen kann, um deren Verzahnung (18) mit der Verzahnung (17) des Schaltrads (16) in Eingriff zu bringen und unter der Einwirkung eines Stosses drehfest zu blockieren und somit das Abwickeln des Riemens zu verhindern, wobei der Dorn (5) aus Formkunststoff besteht und durch einen metallischen Flachstab (8) verstärkt ist, auf dem eine Riemenaufnahmespule (11) angeordnet ist, während der Dorn direkt drehbar in dem Träger (1) gelagert ist und der den Dorn (5) verstärkende Flachstab (8) an einem seiner Enden Vorsprünge aufweist, die aus dem Material der Hülse herausragen und zwei blanke Teile (22) besitzen, die mit sich diametral gegenüberliegenden geradlinigen Abschnitten des Nockenprofils (20) zusammenwirken, um die von dem Sicherheitsgurtriemen ausgeübten Kräfte von der Nockenverzahnung (18) auf die Verzahnung (17) des Schaltrads (16) zu übertragen, dadurch gekennzeichnet, dass der metallische Flachstab (8) in eine Hülse (6) aus Kunststoff eingesteckt ist, welche integrierte lärmdämpfende Endwülste (24, 25) aufweist, die mit den jeweiligen Enden der Flachstabflächen in Berührung stehen, welche den blanken Teilen (22) desselben gegenüberliegend angeordnet und dazu bestimmt sind, mit entsprechenden Teilen des Nockenprofils (20) bei Ruhestellung zusammenzuwirken, um den durch Schwingungen erzeugten Lärm zu dämpfen.

2.- Aufwickler nach Anspruch 1, dadurch gekennzeichnet, dass wenigstens einer der Wülste (24, 25) eine (gegebenenfalls durch eine Pastille ersetzte) Verlängerung (25a) aufweist, die den benachbarten blanken Bereich (22) teilweise abdeckt und im normalen Betrieb beim Verriegeln des Aufwicklers als lärmdämpfendes Element, hingegen unter dem Einfluss eines Stosses als Reaktionselement wirkt, dessen Verformung infolge den Einwirkung des Flachstabs (8) den gegenseitigen Eingriff der Verzahnungen (17, 18) der Nocke (19) und des Schaltrads (16) begünstigt.

3.- Aufwickler nach einem der Ansprüche 1 und 2, dadurch gekennzeichnet, dass das Schaltrad (16) und die Nocke (19) mit entgegensetzten Schnittrichtungen aus Blech ausgeschritten sind, sodass die Flachseite der Verzahnung (17) des Schaltrads (16) der Rundung der Verzahnung (18) der Nocke (19) gegenüberliegt.

4.- Aufwickler nach einem der Ansprüche 1 bis 3, dadurch gekennzeichnet, dass das Verharrungsrad (28) eine Vielzahl von in einer ringsförmigen Wandung (32) mit regelmässigen Winkelabständen angeordneten Löchern (30) besitzt, die ein Ende einer Rückholfeder (32) aus Draht von sehr geringem Durchmesser und grosser Länge festlegen, wobei die Rückholfeder auf einer drehfesten Nabe befestigt ist.

5.- Aufwickler nach einem der Ansprüche 1 bis 4, dadurch gekennzeichnet, dass der Träger (1) die Form einer Gabel aufweist, deren Flansche (2, 3) die Hülse (6) drehbar lagern, wobei Schutzkappen (55, 63) an den Flanschen angeordnet sind und jeweils die mit einem Beschleunigungsfühler (35) verbundene Verriegelungsvorrichtung (16, 19, 28) und die Rückholfeder (62) des Dorns enthalten, und wobei die Schutzkappen (55, 63) an den betreffenden Flanschen (2, 3) des Trägers vermittels gespaltener, mit dem Schutzkappen einstückiger Hohlstifte (56) befestigt sind, die in entsprechende, in den Flanschen vorgesehene Löcher (58) greifen, und dass die Hohlstifte (56) durch Einführung eines ebenfalls mit der entsprechenden Schutzkappe einstückigen Bruchstiftes (60) in die Hohlstiftbohrung festgelegt werden.

6.- Aufwickler nach Anspruch 5, bei dem die Flansche (2, 3) des Trägers (1) durch ein Zwischenstück (65) gehalten werden, dadurch gekennzeichnet, dass die Enden des Zwischenstücks (65) in in jeder der Schutzkappen (55, 63) angeordneten Halteausnehmungen (68) eingreifen.

7.- Aufwickler nach einem der Ansprüche 5 und 6, dadurch gekennzeichnet, dass zwischen der Rückholfeder (62) des Dorns (5) und dem entsprechenden Flansch (2) des Trägers (1) ein Zwischenflansch (64) angeordnet ist, der aus Kunststoff gefertigt ist und dessen Umfang zwischen dem Flansch (2) des Trägers (1) und der die Rückholfeder (62) enthaltenden Schutzkappe (63) eingespannt ist.

8.- Aufwickler nach einem der Ansprüche 5 bis 7, dadurch gekennzeichnet, dass der Dorn (5) im Träger (1) durch das Zusammenwirken der Endflächen des Dorns und ringförmiger Vorsprünge (15) positioniert wird, die die Ofnungen (4) umgeben, in welchen die Hülse (6) gelagert ist.

**Claims**

1.- Self-locking safety-belt winding retractor comprising: a mandrel (5) rotatively mounted in a support (1) and adapted to wind up the strap of the belt, said mandrel heing biased by a torsion spring (62) in the winding-up direction, and a locking device constituted by a cam (19), a ratchet wheel (16) fixed to the support (1) and having inner teeth (17) cooperating with outer teeth (18) provided on the cam (19) and an inertia wheel (28) adapted to move the cam (19) so as to cause its teeth (18) to mesh with the teeth (17) of the ratchet wheel (16) and, under conditions of shock, to lock the mandrel (5) against rotation while preventing the strap from unwinding, said mandrel (5) being made of moulded plastic material reinforced by a metallic bar (8) on which is mounted a strap-receiving spool, said mandrel (5) being rotatively mounted directly on said support (1), said bar (8) which reinforces the mandrel (5) having at one of its ends protruding portions projecting outwardly from the material of said sleeve and presenting two blank portions (22) cooperating with diametrically opposed straight segments (23) of cam profile (20) for transmitting the force exerted by the strap of the belt from the teeth (18) of the cam to the teeth (17) of the ratchet wheel (16), characterized in that the metallic bar (8) is engaged in a sleeve (6) made of plastic material, which comprises integral anti-noise end beads (24, 25) engaging respectively the ends of the faces of the bar (8) that are opposed to said blank portions (22) thereof and adapted to cooperate with corresponding portions of the cam profile (20) in the rest position, so as to reduce the noise produced by the vibrations.

2.- Winding retractor according to claim 1, characterized in that at least one of said beads (24, 25) comprises an extension (25a) (possibly replaced by a pellet) which partially covers the adjacent blank area (22) and functions as an anti-noise element when the winding retractor is blocked in normal working conditions, and as a reaction element the crushing of which under the action of the bar (8) when conditions of shock are prevailing enhances the meshing of the respective teeth (17, 18) of the cam (19) and the ratchet wheel (16).

3.- Winding retractor according to any one of claims 1 and 2, characterized in that the ratchet wheel (16) and the cam (19) are cut out from metal sheet material with opposed cutting directions so that the flat cut side of the teeth (17) of the ratchet wheel (16) is located in front of the rounded side of the teeth (18) of the cam (19).

4.- Winding retractor according to any one of claims 1 to 3, characterized in that the inertia wheel (28) has a plurality of holes (30) provided in an annular wall (31) and arranged with regular angular intervals for fixing the end of a return spring (32) made of wire of a very small diameter and a great length, which is mounted on a non-rotative hub (33).

5.- Winding retractor according to any one of claims 1 to 4, characterized in that said support (1) has the shape of a fork on the legs (2, 3) of which said sleeve (6) is rotatively mounted, while said legs have mounted thereon, respectively, in protecting caps (55, 63), the locking device (16, 19, 28) associated to an acceleration detector (35) and the return spring (62) of the mandrel, said caps (55, 63) being fixed to the respective legs (2, 3) of the support by means of plit hollow pins (56) integral with said caps and engaged in the corresponding holes (58) provided in said legs (2, 3), and in that said pins (56) are blocked in position by introducing into their recess (59) a breakable peg (60) which is also integral with the corresponding cap.

6.- Winding retractor according to claim 5, wherein the legs (2, 3) of the support (1) are maintained by a bracing member (65), characterized in that the ends of the bracing member (65) are engaged in holding recesses (68) provided in each one of said caps (55, 63).

7.- Winding retractor according to any one of claims 5 to 7, characterized in that the mandrel (5) is positioned in the support (1) by the cooperation of the end surfaces of said mandrel and annular projections (15) surrounding the orifices (4) in which said sleeve (6) is rotatively mounted.

8.- Winding retractor according to any one of claims 5 to 7, characterized in that the mandrel (5) is positioned in the support (1) by the cooperation of the end surfaces of said mandrel and annular projections (15) surrounding the orifices (4) in which said sleeve (6) is rotatively mounted.

FIG.1

0 078 203

FIG_2

FIG.3

FIG.6

FIG. 5

FIG. 4

FIG. 5a

0078 203

**FIG.7**

**FIG.9**

**FIG.8**

**FIG.10**